# EUROPEAN PATENT APPLICATION

(11) **EP 3 023 678 A1**
(43) Date of publication of application: **25.05.2016**
(21) Application number: 15195589.5
(22) Date of filing: 20.11.2015
(51) Int. Cl.: F16K 15/14

(54) **MEMBRANE CHECK VALVE FOR MEDICAL LIQUID OXYGEN CONTAINERS**

(30) Priority: 21.11.2014 IT ME20140021 U
(71) Applicant: C.I.M. S.R.L., 98127 Messina (IT)
(72) Inventor: DONATO, Giuseppe, 98168 Messina (IT)
(74) Representative: Celona, Antonio

(57) **Abstract**

A membrane check valve for medical liquid oxygen containers (home oxygen therapy) adapted to avoid the pollution of the medical oxygen transmission pipes (serpentines and valves) from the container to the patient due to the suction of atmospheric elements dispersed in the air and external humidity.

## Description

### Field of the invention

The present invention relates to a valve for medical liquid oxygen containers.

### Background art

Medical oxygen containers are designed to supply 99.9% pure medical oxygen at the user's home and are entrusted to the users for the entire period of use. Therefore, the containers are exposed to a variety of scenarios and methods of use in which elements which may pollute the oxygen contained in the containers are present.

Such containers are typically cryogenic for oxygen therapy in which the oxygen present in liquid form is maintained at a temperature of -185 °C. The liquid oxygen is transformed into gaseous form by means of evaporators which allow it to pass from the liquid phase to the gaseous phase gradual and to reach ambient temperature during the step of dispensing.

The amount of oxygen needed for the therapy is adjusted by a flow adjustment valve connected directly to a humidifier, or bubbler, containing distilled water, connected, in turn, to a face mask by means of a flexible pipe. Disadvantageously, the contaminating elements easily pollute the oxygen in the containers and the known valves cannot block the passage of such pollutants. The need to provide a valve which allows to overcome the aforesaid drawbacks is thus felt.

### Summary of the invention

It is one of the objects of the present invention to provide a membrane check valve for medical oxygen containers which allows to avoid pollution of the transmission pipes of the medical oxygen from the container to the patient, in particular serpentines and valves, by the suction of atmospheric elements dispersed in the air and external humidity.

The present invention thus aims to achieve at least such an object by providing a check valve for a medical oxygen container which, according to claim 1, comprises an inlet opening to allow the oxygen from the container to enter into the valve; an outlet opening to allow said oxygen to exit from said valve; a plate provided with a plurality of through holes for the oxygen to pass from said inlet opening to said outlet opening,
wherein there is provided a flexible flat membrane, arranged adjacent to a first face of the plate facing the outlet opening and comprising the outlet sections of said through holes,
wherein said flexible flat membrane is centrally constrained to said first face, so that when the oxygen passes from said inlet opening to said outlet opening, the flexible flat membrane is adapted to be bent thus allowing the oxygen to exit from the through holes, whereas, when said passage of oxygen is stopped, the flexible flat membrane is adapted to return adjacent to the first face, thus preventing external elements from passing from said outlet opening to said inlet opening.

A second aspect of the present invention relates to a medical liquid oxygen container which, according to claim 12 or 13, comprises a check valve as described above.

The membrane check valve of the present invention is preferably interposed between the bubbler and the flow adjustment valve of the container so that, by operating as a non-return valve, it protects the container from infiltrations of contaminating elements dispersed in the atmosphere and residual humidity caused by the water contained in the bubbler or in the humidity present in all cases in the atmosphere, which are both harmful.

By virtue of such a valve, the suction of such harmful elements due to the depression of the container caused by emptying the container and its low inside temperature in the specific moment is avoided.

A further advantage of such a check valve is that of not altering, and thus ensuring, minimum flow rates of the flow adjustment valve in terms of liters per minute, e.g. 0,2 Lpm, 0,25 Lpm, 0,5 Lpm, 0,75 Lpm, 1 Lpm, unlike the other check valves which are available on the market and which are not designed for the purpose and which would not ensure such a result.

Preferably, the check valve consists of plastic material components, each of which has a specific, complementary function.

According to an embodiment, the valve comprises: a valve body, or a first body, preferably made of plastic material and provided with threading for coupling to the flow adjustment valve; a threaded cap, or second body, preferably made of plastic material and adapted to be connected to a bubbler; a sealing O-Ring, preferably elastomeric, e.g. made of Viton; a flexible inner membrane provided with a shank both made of elastomeric material, e.g. Viton or silicone; a supporting disc, or plate, for the membrane.

In order to ensure the correct operation of the check valve, a supporting disc for the membrane was designed provided with a central hole for inserting the membrane shank and with holes, preferably four holes arranged in a square, for the oxygen to pass.

Advantageously, the supporting disc for the membrane has a first face, on which a height difference is provided between the central zone and the peripheral zone, where the latter works as sealing base.

Such a height difference, preferably from 1 to 4 mm, causes the elastomeric membrane to be tensioned, by virtue of the shank interlocked in the central hole, towards its housing due the height difference existing between the peripheral zone and the central depression zone, or perforated shallow recess, of the supporting disc. The shank, or beam, of the membrane thus allows the membrane to be fixed to the supporting disc in a stable manner despite being allowed to be bent. Such a design contrivance, which allows the membrane to be bent in the direction followed by the oxygen which passes through the holes along the path of the container to the face mask, ensures the passage of oxygen without altering the flow rate of the flow dispensing valve.

Once the flow of oxygen has ended in the check valve, the check valve returns to the closed position, i.e. with the membrane not bent, thus preventing the pollution of the pipes (serpentines and valves) due to external elements.

The elastomeric membrane and the support disc are closed inside bodies, or joining components, e.g. two bodies which work as casing. Preferably, there is a first body, or valve body, which is preferably a single block obtained by machining by means of a machine tool, from a solid cylinder of the same material.

Preferably, the valve body is appropriately machined inside to obtain: a) a cylindrical portion of diameter preferably from 20 to 80 mm, e.g. of about 30 mm, in which a threading is obtained, e.g. of diameter equal to 9/16" for 18 threads, which works as flow adjustment valve present in the container; b) a further cylindrical portion, for housing the supporting disc and the O-ring which ensures the mechanical sealing, of diameter preferably from 30 to 75 mm, e.g. of about 40 mm, with a further inner threading with a pitch, for example, of about 1.5 mm. Moreover, there is a second body, or joining element, also referred to as lid, which is preferably a single block obtained by machining, by means of a machine tool, from a solid cylinder of the same material.

The lid preferably has: an external threading of diameter equal to 9/16" for 18 threads; and a shallow recess of diameter equal to 37.5 mm, thickness of about 2 mm, internally threaded for a diameter of 40 mm with a pitch of about 1.5 mm.

The first and the second body are designed to be screwed onto one another, after inserting the supporting disc, the membrane and the O-Ring, compressing the O-Ring to ensure sealing.

The couplings of the above parts are preferably exclusively mechanical and there is no use of sealing and/or gluing substances for reasons of compatibility of such materials with oxygen.

The parts, preferably the two parts, which form the valve body, except for the membrane and the supporting disc, preferably have a glue which is isolated from the O-ring because it is placed before the chamber in which oxygen is present to avoid that the valve could split or be spoiled during the decommissioning of the dispenser.

The check valve of the present invention has advantages on professional level in terms of maintenance and supply and on domestic level in terms of consumption and use.

On professional level, the most significant result is certainly that of rationalizing maintenance processes by generating a cost abatement and above all reducing the possibility of pollution of the oxygen in the containers. On domestic level, the most significant result is that of protecting the container from the risks illustrated above and from the risks caused by the user's negligence, such as for example the failure to close the flow adjustment valve which generates the suction of humidity or of external elements dispersed in the air, once the product has flowed out and the pressure is zero due to the consequent depression caused by the very low internal temperature.

The dependent claims describe preferred embodiments of the invention.

### Brief description of the drawings

Further features and advantages of the invention will become more apparent from the detailed description of a preferred, but not exclusive, embodiment of a check valve shown by way of non-limitative example, with reference to the accompanying drawings, in which:

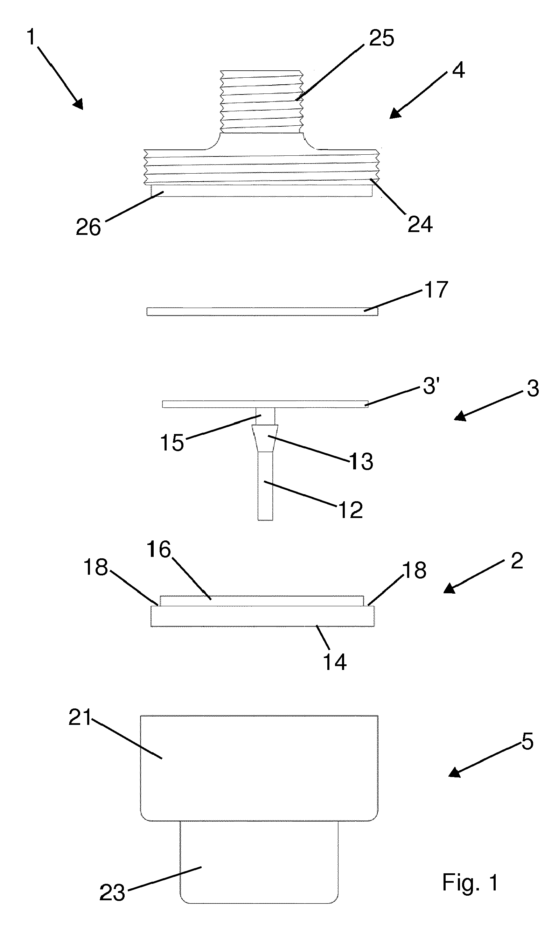

Fig. 1 shows an exploded front view of the valve according to the invention;
Fig. 2 shows an exploded perspective view of some components of the valve in Fig. 1;

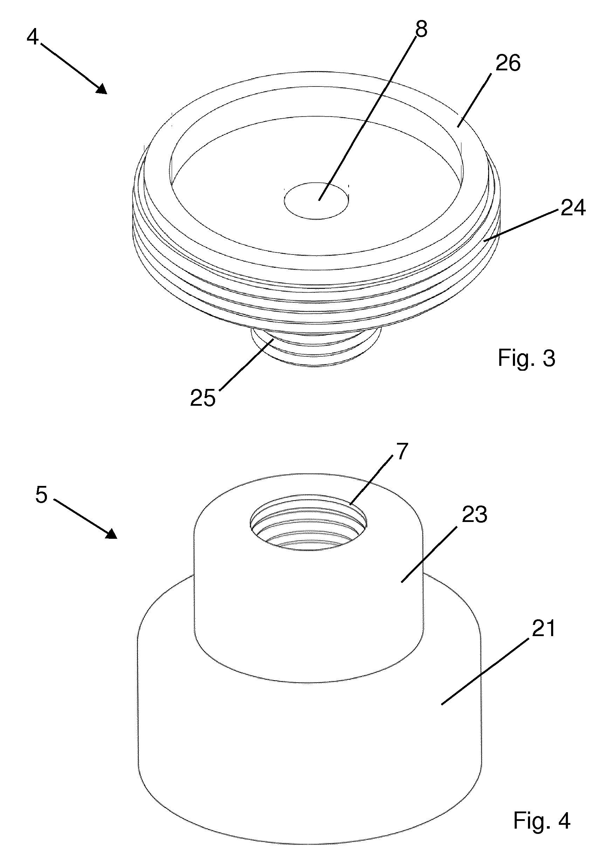

Fig. 3 shows a component of the valve in Fig. 1;
Fig. 4 shows another component of the valve in Fig. 1.

The same reference numbers in the figures identify the same members.

### Detailed description of a preferred embodiment of the invention

With reference to the figures, an embodiment of a check valve 1 is shown for a medical oxygen container. The check valve 1 comprises an inlet opening 7 to allow the oxygen from the container to enter into the check valve 1; an outlet opening 8 to allow the oxygen to exit from the valve; a plate 2 provided with a plurality of through holes 6 for the oxygen to pass from the inlet opening 7 to the outlet opening 8.

The check valve 1 also comprises a flexible flat membrane 3, e.g. made of rubber, arranged adjacent to a first face 9 of plate 2 facing the outlet opening 8 and comprising the outlet sections of said through holes 6. The flexible flat membrane 3 is centrally constrained to the first face 9, so that when the oxygen passes from the inlet opening 7 to the outlet opening 8, the flexible flat membrane 3 is adapted to be bent thus allowing the oxygen to exit from the through holes 6. Instead, when the passage of oxygen is stopped, the flexible flat membrane 3 goes back to be adjacent to the first face 9 thus preventing external elements from passing from the outlet opening 8 to the inlet opening 7.

The first face 9 is provided with a central depression zone 10 in which through holes 6 are made. The outlet sections of the through holes 6 are on said central depression zone 10. The central depression zone 10 is recessed with respect to a peripheral zone 20 of the first face 9, so that a height difference is present between the central depression zone 10 and the peripheral zone 20 of the first face 9. Such a height difference is from 1 to 4 mm, e.g. about 2 mm.

Plate 2 is centrally provided with a central through hole 11 about which the through holes 6 are distributed, which in this embodiment are four in number, although a different number of through holes 6 can be contemplated. Furthermore, the through holes 6 are arranged along a circumference the center of which coincides with the center of the first face 9.

The flexible flat membrane 3 has a flat base 3', which covers the first face 9, and a central flexible shank 12 substantially orthogonal to the flat base 3'.

The central flexible shank 12 is interlocked with the plate 2 passing through the central through hole 11.

In particular, the central flexible shank 12 is provided with a protrusion 13, spaced apart from the flat base 3' by a shank segment 15 comprising an annular shoulder resting on a second face 14 of plate 2, opposite to the first face 9. In particular, the protrusion 13 is tapered in distal direction with respect to the segment 15 and allows to constrain the flexible membrane 3 to the plate 2.

The length of the shank segment 15 is equal to about the sum of the length of the central through hole 11 and of the height difference between the central depression zone 10 and the peripheral zone 20 of the first face 9. Alternatively, the length of the shank segment 15 is at least equal to the length of the central through hole 11.

The inlet opening 7 is provided on a first body 5 housing the plate 2 / flexible flat membrane 3 assembly in a cavity thereof, and the outlet opening 8 is provided on a second body 4.

The first body 4 comprises an upper cylindrical portion 21. It is worth noting that the words upper and lower are used to establish a non-limiting convention. The inner surface of such an upper cylindrical portion 21 is at least partially threaded. Moreover, an edge 22 on which the face 14 of plate 2 rests extends inwards from the lower part of the upper cylindrical portion 21. Under the upper lower portion 21, the first body 5 comprises a lower cylindrical portion 23 in which the first opening 7 is obtained. The latter is delimited by a threaded wall 27 which communicates with the space inside the upper cylindrical portion 21. The threaded wall 27 of the lower cylindrical portion 23 allows the attachment of a flow adjustment valve.

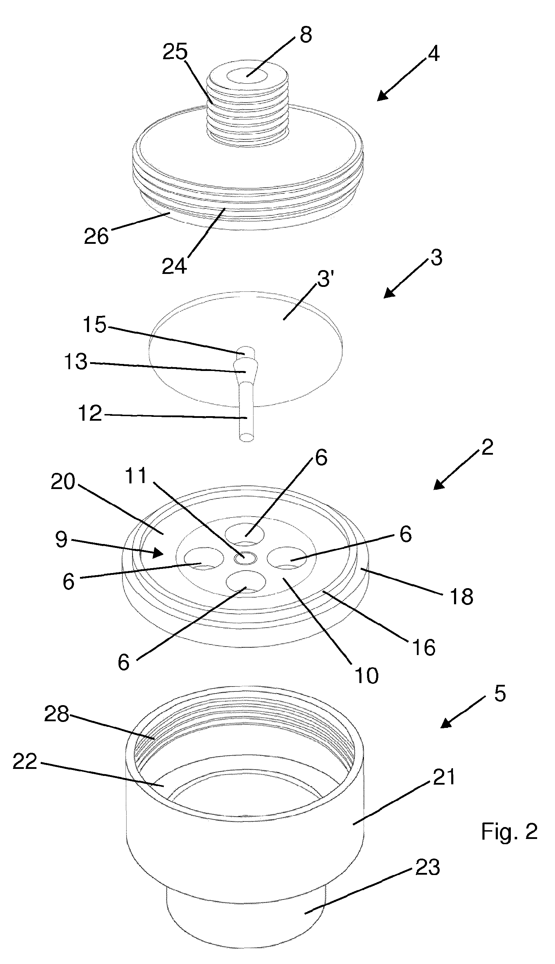

The second body 4 comprises, with reference to Fig. 2, a lower cylindrical portion 24 externally threaded and screwed to the first body 5, in particular to the threading 28 of the upper cylindrical portion 21. The lower cylindrical portion 24 of the second body 4 is also provided with an edge 26 which extends towards the first body 5. The edge 26 is coaxial to the threaded part of the lower portion 24 and has a slightly smaller diameter than such a threaded part.

The second body 4 also comprises an upper cylindrical portion 25, of smaller diameter than the lower portion 24 and also externally threaded to allow the attachment of another device, e.g. a bubbler (not shown). The second opening 8 crosses the lower portion 24 and the upper portion 25 of the second body 4.

The inlet opening 7, the plate 2, in particular the central through hole 11, the flexible flat membrane 3, in particular the flexible central shank 12, and the outlet opening 8 are mutually coaxial.

The first face 9 of plate 2 is delimited by a peripheral annular protrusion 16 which extends towards the second body 4. Furthermore, an elastomeric O-ring 17 is provided, e.g. made of Viton, closed between the second body 4 and the first body 5, and which externally surrounds the peripheral annular protrusion 16, and is arranged on the annular housing 18.

The invention also provides a container (not shown) for medical liquid oxygen comprising a check valve according to the invention.

The check valve is arranged between an oxygen flow adjustment valve connected to the container and a humidifier connectable to a face mask.

The check valve can also be arranged inside a humidifier connected upstream to an oxygen flow adjustment valve and connectable downstream to a face mask.

## Claims

1. A check valve (1) for a medical oxygen container comprising:
- an inlet opening (7) to allow the oxygen from the container to enter into the valve,
- an outlet opening (8) to allow said oxygen to exit from said valve,
- a plate (2) provided with a plurality of through holes (6) to allow the oxygen to pass from said inlet opening (7) to said outlet opening (8),
wherein there is provided a flexible flat membrane (3), arranged adjacent to a first face (9) of the plate (2) facing the outlet opening (8) and comprising the outlet sections of said through holes (6),
wherein said flexible flat membrane (3) is centrally constrained to said first face (9), so that during a passage of oxygen from said inlet opening (7) to said outlet opening (8), the flexible flat membrane (3) is adapted to be bent thus allowing the oxygen to exit from said through holes (6),
whereas, when said passage of oxygen is stopped, the flexible flat membrane (3) is adapted to return adjacent to the first face (9), thus preventing external elements from passing from said outlet opening (8) to said inlet opening (7).

2. A valve according to claim 1, wherein the first face (9) is provided with a central depression zone (10) where there are provided the outlet sections of the through holes (6).

3. A valve according to claim 2, wherein the height difference between the central depression zone (10) and a peripheral zone (20) of the first face (9) is from 1 to 4 mm.

4. A valve according to any one of the preceding claims, wherein the through holes (6) are distributed about a central through hole (11) of the plate (2), and wherein the flexible flat membrane (3) has a flat base (3'), adapted to cover the first face (9), and a central flexible shank (12) orthogonal to the flat base (3') and interlocked with the plate (2) by means of said central through hole (11).

5. A valve according to claim 4, wherein said central flexible shank (12) is provided with a protrusion (13), spaced apart from the flat base (3') by a shank segment (15) having a predetermined length and comprising an annular shoulder resting on a second face (14) of the plate (2), opposite to the first face (9).

6. A valve according to claim 5, wherein the predetermined length of the shank segment (15) is at least equal to the length of the central through hole (11), preferably equal to the sum of the length of the central through hole (11) and of said height difference.

7. A valve according to any one of the preceding claims, wherein the inlet opening (7) is provided on a first body (5) housing the plate (2)-flexible flat membrane (3) assembly in a cavity thereof, and wherein the outlet opening (8) is provided on a second body (4), said first body (5) and said second body (4) defining together a casing of the check valve (1).

8. A valve according to claim 7, wherein the first face (9) of the plate (2) is delimited by a peripheral annular protrusion (16) beyond which there is provided an annular housing (18) for an O-ring (17) closed by said second body (4) and by said first body (5).

9. A valve according to any one of the preceding claims, wherein the inlet opening (7), the plate (2), the flexible flat membrane (3) and the outlet opening (8) are mutually coaxial.

10. A valve according to any one of the preceding claims, wherein said through holes (6), preferably at least four in number, are arranged along a circumference having the center coinciding with the center of the first face (9).

11. A valve according to any one of the preceding claims, wherein the flexible flat membrane (3) is made of rubber.

12. A container for medical liquid oxygen comprising a check valve according to any one of the preceding claims, wherein said check valve is arranged between an oxygen flow adjustment valve, connected to the container, and a humidifier connectable to a face mask.

13. A container for medical liquid oxygen comprising a check valve according to any one of the preceding claims, wherein said check valve is arranged in a humidifier connected upstream to an oxygen flow adjustment valve and connectable downstream to a face mask.
